(19) Europäisches Patentamt
European Patent Office
Office européen des brevets

(11) EP 4 615 142 A1

(12) **EUROPEAN PATENT APPLICATION**
published in accordance with Art. 153(4) EPC

(43) Date of publication:
**10.09.2025 Bulletin 2025/37**

(21) Application number: **23896936.4**

(22) Date of filing: **01.12.2023**

(51) International Patent Classification (IPC):
***H04W 74/08** (2024.01)*

(52) Cooperative Patent Classification (CPC):
**H04L 5/00; H04W 36/00; H04W 36/08; H04W 74/08; H04W 74/0833**

(86) International application number:
**PCT/CN2023/135854**

(87) International publication number:
**WO 2024/114794 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2022 CN 202211542962**

(71) Applicant: **Huawei Technologies Co., Ltd.**
**Shenzhen, Guangdong 518129 (CN)**

(72) Inventors:
- **WANG, Yu**
  **Shenzhen, Guangdong 518129 (CN)**
- **LUO, Hejia**
  **Shenzhen, Guangdong 518129 (CN)**
- **KONG, Chuili**
  **Shenzhen, Guangdong 518129 (CN)**
- **ZHAO, Feiran**
  **Shenzhen, Guangdong 518129 (CN)**
- **LI, Rong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) RANDOM ACCESS RESOURCE DETERMINATION METHOD AND COMMUNICATION APPARATUS

(57) This application relates to the field of communication technologies, and provides a random access resource determining method and a communication apparatus, to improve efficiency and a success rate of group handover. The method includes: A first communication apparatus obtains first configuration information, where the first configuration information is for configuring random access channel occasions in N consecutive frames within a first random access periodicity, where N is an integer greater than 1. The first communication apparatus determines a first random access resource based on the first configuration information, where the first random access resource is used by the first communication apparatus to access a target cell.

First communication apparatus
Second communication apparatus
S701: First configuration information
S702: Determine a first random access resource based on the first configuration information
S703: Access a target cell through the first random access resource

FIG. 7

EP 4 615 142 A1

## Description

### CROSS-REFERENCE TO RELATED APPLICATIONS

This application claims priority to Chinese Patent Application No. 202211542962.0, filed with the China National Intellectual Property Administration on December 2, 2022 and entitled "RANDOM ACCESS RESOURCE DETERMINING METHOD AND COMMUNICATION APPARATUS", which is incorporated herein by reference in its entirety.

### TECHNICAL FIELD

Embodiments of this application relate to the field of communication technologies, and in particular, to a random access resource determining method and a communication apparatus.

### BACKGROUND

With development of satellite networks, the satellite networks are generally ultra-dense and heterogeneous. The scale of the satellite network has grown from 66 satellites of the Iridium satellite constellation to 720 satellites of the OneWeb satellite constellation, and eventually extended to more than 12,000 satellites of the ultra-dense Starlink (Starlink) satellite constellation in a low earth orbit (low earth orbit, LEO). In addition, the satellite network is heterogeneous, and has evolved from a conventional single-layer communication network to a multi-layer communication network. The communication satellite network inclines to achieve complex and diversified functions, and is gradually compatible with and supports navigation enhancement, earth observation, multi-dimensional information in-orbit processing, and the like.

In a beam-hopping satellite system, a satellite performs zone coverage in a time division manner through beam hopping. Movement of the satellite triggers group handover of terminal devices in a specific zone (in other words, a plurality of terminal devices in the zone almost simultaneously initiate handover). A current cell handover design is specific to handover triggered by movement of a terminal device, and an access resource configured for handover of a single terminal device is not usable for group handover of terminal devices caused by the movement of the satellite.

### SUMMARY

Embodiments of this application provide a random access resource determining method and a communication apparatus, to improve efficiency and a success rate of group handover.

According to a first aspect, an embodiment of this application provides a random access resource determining method, including: A first communication apparatus obtains first configuration information, where the first configuration information is for configuring random access channel occasions in N consecutive frames within a first random access periodicity, where N is an integer greater than 1. The first communication apparatus determines a first random access resource based on the first configuration information, where the first random access resource is used by the first communication apparatus to access a target cell.

According to the foregoing design, long-periodicity and intensive access resources may be configured for a terminal device, to adapt to a group handover scenario mainly caused by movement of a satellite, and improve efficiency and a success rate of group handover. It may be understood that the first random access periodicity is greater than a second random access periodicity for initial access.

In a possible design, the first communication apparatus accesses the target cell through the first random access resource when the first communication apparatus performs cell handover. In another possible design, the first communication apparatus accesses the target cell through the first random access resource when a device group corresponding to a zone in which the first communication apparatus is located performs cell handover.

In a possible design, the first configuration information includes first information and second information, the first information is for determining a start frame in the N consecutive frames within the first random access periodicity, and the second information includes information about a value of N. In this design, the first random access periodicity and the N consecutive frames in the first random access periodicity are indirectly configured for the first communication apparatus by using indication information, to reduce signaling overheads.

The following describes some possible designs for the first configuration information.

In a first possible design, the first information includes a number M of a reference frame, and a number n_f_NTN of the start frame in the N consecutive frames within the first random access periodicity and the number M of the reference frame satisfy the following relational expression:

$$n_f_NTN \bmod (M*x)=y,$$

where mod represents a modulo operator, and x and y are preconfigured positive integers.

According to this design, the first communication apparatus substitutes M included in the first configuration information and preconfigured x and y into the relational expression, to determine a start frame in which a RO is located in one or more first random access periodicities. One first random access periodicity exists between two adjacent start frames in a plurality of start frames.

In a second possible design, the first information includes a number M of a reference frame, and a number n_f_NTN of the start frame in the N consecutive frames within the first random access periodicity and the reference frame satisfy the following relational expression:

$$n_f_NTN \bmod (2^{M}*x)=y,$$

where mod represents a modulo operator, and x and y are preconfigured positive integers.

In this design, a value of M carried in the first configuration information may be decreased. Compared with the first possible design, this design can further reduce signaling overheads.

In a third possible design, the first information includes a number M of a reference frame and a first offset R, and a number n_f_NTN of the start frame in the N consecutive frames within the first random access periodicity and the number M of the reference frame satisfy the following relational expression:

$$(n_f_NTN-R) \bmod (M*x)=y,$$

where mod represents a modulo operator, and x and y are preconfigured positive integers.

The offset is introduced in this design. Compared with the first possible design, this design can extend a value range of n_f_NTN. This design is applied to the group handover scenario, so that more frame configurations of ROs for the group handover can be obtained through extension, to avoid a conflict with a RO resource for the initial access. This facilitates the efficiency and the success rate of the group handover caused by the movement of the satellite.

In a fourth possible design, the first information includes a number M of a reference frame and a first offset R, and a number n_f_NTN of the start frame in the N consecutive frames within the first random access periodicity and the reference frame satisfy the following relational expression:

$$(n_f_NTN-R) \bmod (2^{M}*x)=y,$$

where mod represents a modulo operator, and x and y are preconfigured positive integers.

The offset is introduced in this design. Compared with the second possible design, this design can extend a value range of n_f_NTN. This design is applied to the group handover scenario, so that more frame configurations of ROs for the group handover can be obtained through extension, to avoid a conflict with a RO resource for the initial access. This facilitates the efficiency and the success rate of the group handover caused by the movement of the satellite.

In the foregoing first to fourth possible designs, the first communication apparatus may further obtain third information, where the third information is for determining values of x and y.

In a possible design, the first configuration information includes fourth information, and the fourth information indicates an association relationship between at least one handover beam of the first communication apparatus and a random access channel occasion within the first random access periodicity. Based on this, the first communication apparatus may select, as the first random access resource, a random access channel occasion corresponding to one or more handover beams. Alternatively, it may be understood that the first random access resource may include a random access channel occasion associated with a part or all of handover beams of the first communication apparatus.

For example, a handover beam used when the first communication apparatus performs handover (for example, group handover) may be described as a target handover beam, and the first random access resource includes a random access channel occasion associated with the target handover beam of the first communication apparatus. Optionally, the first configuration information includes identification information of the target handover beam, in other words, the first communication apparatus may determine the target handover beam based on the first configuration information.

According to a second aspect, an embodiment of this application provides a random access resource determining method, including: A second communication apparatus determines first configuration information, where the first configuration information is for configuring random access channel occasions in N consecutive frames within a first random access periodicity, where N is an integer greater than 1. The second communication apparatus sends the first configuration information to a first communication apparatus, where the first configuration information is for determining a first random access resource, and the first random access resource is used by the first communication apparatus to access a target cell.

For a definition and a design of the first configuration information, refer to the related design in the first aspect for understanding. Details are not described in this embodiment of this application. Values of x and y in the foregoing relational expressions may be indicated by the second communication apparatus to the first communication apparatus. For example, in a possible design, the second communication apparatus may further send third information to the first communication apparatus, where the third information is for determining the values of x and y.

For a definition and a design scheme of fourth information in the first configuration information, also refer to the related design in the first aspect for understanding. Details are not described in this embodiment of this application.

According to a third aspect, an embodiment of this application provides a communication apparatus. The communication apparatus may be a first communication apparatus, may be an apparatus, a module, a chip, or the like in the first communication apparatus, or may be an apparatus that can be used in collaboration with the first communication apparatus. In a design, the communication apparatus may include modules that one-to-one correspond to methods/operations/steps/actions described in the first aspect. The module may be implemented by a hardware circuit, software, or a combination of a hardware circuit and software. In a design, the communication apparatus may include a processing module and a communication module.

The communication module is configured to obtain first configuration information, where the first configuration information is for configuring random access channel occasions in N consecutive frames within a first random access periodicity, where N is an integer greater than 1.

The processing module is configured to determine a first random access resource based on the first configuration information, where the first random access resource is used by the first communication apparatus to access a target cell.

In a possible design, when the first communication apparatus performs cell handover, the processing module is configured to control the first communication apparatus to access the target cell through the first random access resource. In another possible design, when a device group corresponding to a zone in which the first communication apparatus is located performs cell handover, the processing module is configured to control the first communication apparatus to access the target cell through the first random access resource.

In a possible design, the first communication apparatus accesses the target cell through the first random access resource when the first communication apparatus performs cell handover. In another possible design, the first communication apparatus accesses the target cell through the first random access resource when a device group corresponding to a zone in which the first communication apparatus is located performs cell handover.

In a possible design, the first configuration information includes first information and second information, the first information is for determining a start frame in the N consecutive frames within the first random access periodicity, and the second information includes information about a value of N.

The following describes some possible designs for the first configuration information.

In a first possible design, the first information includes a number M of a reference frame, and a number n_f_NTN of the start frame in the N consecutive frames within the first random access periodicity and the number M of the reference frame satisfy the following relational expression:

$$\text{n_f_NTN} \bmod (M*x)=y,$$

where mod represents a modulo operator, and x and y are preconfigured positive integers.

In a second possible design, the first information includes a number M of a reference frame, and a number n_f_NTN of the start frame in the N consecutive frames within the first random access periodicity and the reference frame satisfy the following relational expression:

$$\text{n_f_NTN} \bmod (2^{M}*x)=y,$$

where mod represents a modulo operator, and x and y are preconfigured positive integers.

In a third possible design, the first information includes a number M of a reference frame and a first offset R, and a number n_f_NTN of the start frame in the N consecutive frames within the first random access periodicity and the number M of the reference frame satisfy the following relational expression:

$$(\text{n_f_NTN}-R) \bmod (M*x)=y,$$

where mod represents a modulo operator, and x and y are preconfigured positive integers.

In a fourth possible design, the first information includes a number M of a reference frame and a first offset R, and a number n_f_NTN of the start frame in the N consecutive frames within the first random access periodicity and the reference frame satisfy the following relational expression:

$$(n_f_NTN-R) \bmod (2^{M}*x)=y,$$

where mod represents a modulo operator, and x and y are preconfigured positive integers.

In the foregoing first to fourth possible designs, the communication module is further configured to obtain third information, where the third information is for determining values of x and y.

In a possible design, the first configuration information includes fourth information, and the fourth information indicates an association relationship between at least one handover beam of the first communication apparatus and a random access channel occasion within the first random access periodicity.

For example, a handover beam used when the first communication apparatus performs handover (for example, group handover) may be described as a target handover beam, and the first random access resource includes a random access channel occasion associated with the target handover beam of the first communication apparatus. Optionally, the first configuration information includes identification information of the target handover beam, in other words, the first communication apparatus may determine the target handover beam based on the first configuration information.

According to a fourth aspect, an embodiment of this application provides a communication apparatus. The communication apparatus may be a second communication apparatus, may be an apparatus, a module, a chip, or the like in the second communication apparatus, or may be an apparatus that can be used in collaboration with the second communication apparatus. In a design, the communication apparatus may include modules that one-to-one correspond to methods/operations/steps/actions described in the second aspect. The module may be implemented by a hardware circuit, software, or a combination of the hardware circuit and software. In a design, the communication apparatus may include a processing module and a communication module.

The processing module is configured to determine first configuration information, where the first configuration information is for configuring random access channel occasions in N consecutive frames within a first random access periodicity, where N is an integer greater than 1.

The communication module is configured to send the first configuration information to a first communication apparatus, where the first configuration information is for determining a first random access resource, and the first random access resource is used by the first communication apparatus to access a target cell.

In a possible design, the first configuration information includes first information and second information, the first information is for determining a start frame in the N consecutive frames within the first random access periodicity, and the second information includes information about a value of N.

The following describes some possible designs for the first configuration information.

In a first possible design, the first information includes a number M of a reference frame, and a number n_f_NTN of the start frame in the N consecutive frames within the first random access periodicity and the number M of the reference frame satisfy the following relational expression:

$$n_f_NTN \bmod (M*x)=y,$$

where mod represents a modulo operator, and x and y are preconfigured positive integers.

In a second possible design, the first information includes a number M of a reference frame, and a number n_f_NTN of the start frame in the N consecutive frames within the first random access periodicity and the reference frame satisfy the following relational expression:

$$n_f_NTN \bmod (2^{M}*x)=y,$$

where mod represents a modulo operator, and x and y are preconfigured positive integers.

In a third possible design, the first information includes a number M of a reference frame and a first offset R, and a number n_f_NTN of the start frame in the N consecutive frames within the first random access periodicity and the number M of the reference frame satisfy the following relational expression:

$$(n_f_NTN-R) \bmod (M*x)=y,$$

where mod represents a modulo operator, and x and y are preconfigured positive integers.

In a fourth possible design, the first information includes a number M of a reference frame and a first offset R, and a number n_f_NTN of the start frame in the N consecutive frames within the first random access periodicity and the reference frame satisfy the following relational expression:

$$(n_f_NTN-R) \bmod (2^{M} * x) = y,$$

where mod represents a modulo operator, and x and y are preconfigured positive integers.

In the foregoing first to fourth possible designs, the communication module is further configured to send third information, where the third information is for determining values of x and y.

In a possible design, the first configuration information includes fourth information, and the fourth information indicates an association relationship between at least one handover beam of the first communication apparatus and a random access channel occasion within the first random access periodicity. Based on this, the first communication apparatus may select, as the first random access resource, a random access channel occasion corresponding to one or more handover beams. Alternatively, it may be understood that the first random access resource may include a random access channel occasion associated with a part or all of handover beams of the first communication apparatus.

For example, a handover beam used when the first communication apparatus performs handover (for example, group handover) may be described as a target handover beam, and the first random access resource includes a random access channel occasion associated with the target handover beam of the first communication apparatus. Optionally, the first configuration information includes identification information of the target handover beam, in other words, the first communication apparatus may determine the target handover beam based on the first configuration information.

According to a fifth aspect, an embodiment of this application provides a communication apparatus. The communication apparatus includes a processor, configured to implement the method described in the first aspect. The processor is coupled to a memory, and the memory is configured to store instructions and data. When the processor executes the instructions stored in the memory, the method described in the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

In a possible device, the communication apparatus includes:

a memory, configured to store instructions;
a communication interface, configured to obtain first configuration information, where the first configuration information is for configuring random access channel occasions in N consecutive frames within a first random access periodicity, where N is an integer greater than 1; and
a processor, configured to determine a first random access resource based on the first configuration information, where the first random access resource is used by the first communication apparatus to access a target cell.

According to a sixth aspect, an embodiment of this application provides a communication apparatus. The communication apparatus includes a processor, configured to implement the method described in the second aspect. The processor is coupled to a memory, and the memory is configured to store instructions and data. When the processor executes the instructions stored in the memory, the method described in the second aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

In a possible device, the communication apparatus includes:

a memory, configured to store instructions;
a processor, configured to determine first configuration information, where the first configuration information is for configuring random access channel occasions in N consecutive frames within a first random access periodicity, where N is an integer greater than 1; and
a communication interface, configured to send the first configuration information to a first communication apparatus, where the first configuration information is for determining a first random access resource, and the first random access resource is used by the first communication apparatus to access a target cell.

According to a seventh aspect, this disclosure provides a communication system, including the communication apparatus described in the third aspect or the fifth aspect and the communication apparatus described in the fourth aspect or the sixth aspect.

According to an eighth aspect, this disclosure further provides a computer program. When the computer program is run on a computer, the computer is enabled to perform the method provided in the first aspect or the second aspect.

According to a ninth aspect, this disclosure further provides a computer program product, including instructions.

When the instructions are run on a computer, the computer is enabled to perform the method provided in the first aspect or the second aspect.

According to a tenth aspect, this disclosure further provides a computer-readable storage medium. The computer-readable storage medium stores a computer program or instructions; and when the computer program or the instructions are run on a computer, the computer is enabled to perform the method provided in the first aspect or the second aspect.

According to an eleventh aspect, this disclosure further provides a chip. The chip is configured to read a computer program stored in a memory, to perform the method provided in the first aspect or the second aspect; or the chip includes a circuit configured to perform the method provided in the first aspect or the second aspect.

According to a twelfth aspect, this disclosure further provides a chip system. The chip system includes a processor, configured to support an apparatus to implement the method provided in the first aspect or the second aspect. In a possible design, the chip system further includes a memory, and the memory is configured to store a program and data that are necessary for the apparatus. The chip system may include a chip, or may include a chip and another discrete component.

For effects of the solution provided in any one of the second aspect to the twelfth aspect, refer to corresponding descriptions in the first aspect.

## BRIEF DESCRIPTION OF DRAWINGS

FIG. 1 is a diagram of an architecture of a terrestrial network communication system according to an embodiment of this application;
FIG. 2 is a diagram of an architecture of an NTN communication system according to an embodiment of this application;
FIG. 3 is a diagram of an architecture of a 5G satellite communication system according to an embodiment of this application;
FIG. 4 is a diagram of an architecture of a satellite communication system according to an embodiment of this application;
FIG. 5 is a diagram of a beam-hopping communication process according to an embodiment of this application;
FIG. 6 is a diagram of terminal device group handover that occurs in beam-hopping communication according to an embodiment of this application;
FIG. 7 is a schematic flowchart of a random access resource determining method according to an embodiment of this application;
FIG. 8 is a diagram of configuration of a random access channel occasion according to an embodiment of this application;
FIG. 9 is a diagram of configuration of a handover beam and a random access channel occasion according to an embodiment of this application;
FIG. 10 is one of diagrams of a structure of a communication apparatus according to an embodiment of this application; and
FIG. 11 is one of diagrams of a structure of a communication apparatus according to an embodiment of this application.

## DESCRIPTION OF EMBODIMENTS

To make objectives, technical solutions, and advantages of embodiments of this application clearer, the following further describes embodiments of this application in detail with reference to the accompanying drawings.

At least one (item) in embodiments of this application indicates one or more (items). "A plurality of (items) "means two (items) or more than two (items). The term "and/or" describes an association relationship between associated objects and represents that three relationships may exist. For example, A and/or B may represent the following three cases: Only A exists, both A and B exist, and only B exists. The character "/" generally indicates an "or" relationship between associated objects. In addition, it should be understood that although terms such as "first" and "second" may be used in embodiments of this application to describe objects, these objects should not be limited by these terms. These terms are merely intended to distinguish the objects from each other.

The terms "include", "have", and any variants thereof in the following descriptions of embodiments of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, words such as "example" or "for example" represent giving an example, an illustration, or a description. Any method or design scheme described as an "example" or "for example" in embodiments of this application should not be construed as being more preferred or having more advantages than another method or design scheme. To be precise, use of the words such as "example" or "for example" is intended to present a relative concept in a specific manner.

Technologies provided in embodiments of this application may be applied to various communication systems, for example, non-terrestrial network (non-terrestrial network, NTN) systems such as a satellite communication system, a high-altitude platform station (high-altitude platform station, HAPS) communication system, and an uncrewed aerial vehicle, an integrated communication and navigation (integrated communication and navigation, ICAN) system, a global navigation satellite system (global navigation satellite system, GNSS), and an ultra-dense low-orbit satellite communication system. The communication system to which embodiments of this application are applied may be converged with a terrestrial communication system. For example, the terrestrial communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system, for example, a 6G communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description.

For example, the terrestrial communication system may include at least one terminal device and at least one network device. The network device may send a downlink signal to the terminal device, and/or the terminal device may send an uplink signal to the network device. In addition, it may be understood that if the communication system includes a plurality of terminal devices, the plurality of terminal devices may also send a signal to each other, in other words, both a network element that sends a signal and a network element that receives the signal may be terminal devices.

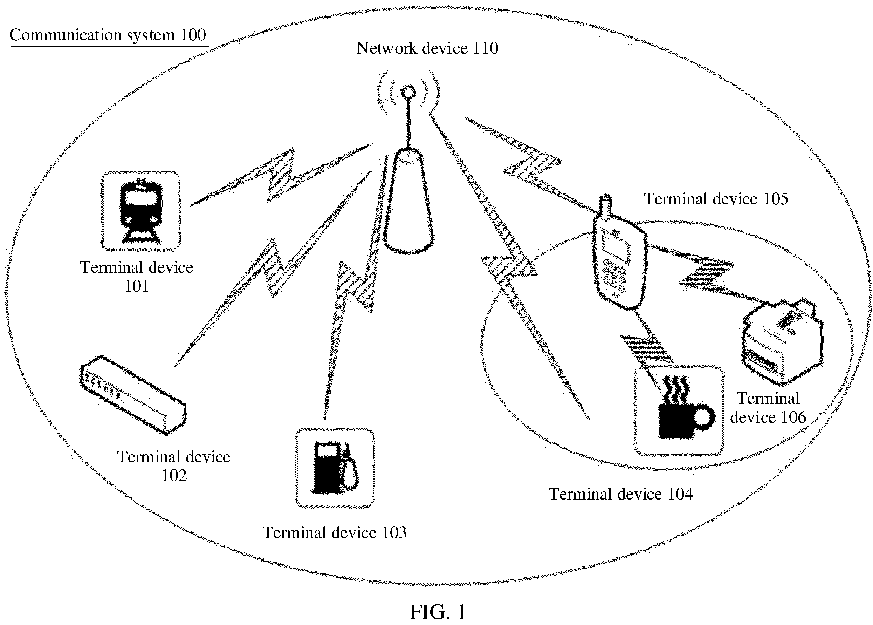

FIG. 1 shows an architecture of a mobile communication system. The communication system 100 may include a network device 110 and terminal devices 101 to 106. It should be understood that the communication system 100 may include more or fewer network devices or terminal devices. The network device or the terminal device may be hardware, may be software obtained through functional division, or may be a combination thereof. In addition, the terminal devices 104 to 106 may also form a communication system. For example, the terminal device 105 may send downlink data to the terminal device 104 or the terminal device 106. The network device and the terminal device may communicate with each other via another device or network element. The network device 110 may send downlink data to the terminal devices 101 to 106, or may receive uplink data sent by the terminal devices 101 to 106. Certainly, the terminal devices 101 to 106 may send uplink data to the network device 110, or may receive downlink data sent by the network device 110.

The network device 110 is a node in a radio access network (radio access network, RAN), and may also be referred to as a base station or a RAN node (or device). Currently, some examples of the network device 101 may be: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), a satellite, and an uncrewed aerial vehicle. The network device may alternatively be a base station (next generation NodeB, gNB), a TRP, or a TP in a 5G system, or may be one antenna panel or one group of antenna panels (including a plurality of antenna panels) of a gNB in a 5G system. In addition, the network device may alternatively be a network node, for example, a BBU or a distributed unit (distributed unit, DU), that is included in a gNB or a TP. Alternatively, the network device may be a device responsible for a network-side function in a device-to-device (device-to-device, D2D) communication system, a machine-to-machine (machine-to-machine, M2M) communication system, an Internet of things (Internet of things, IoT) communication system, an Internet of vehicles communication system, or another communication system. The network device 110 may alternatively be a network device in a future possible communication system. A specific technology and a specific device form that are used for the network device are not limited in embodiments of this application.

The terminal devices 101 to 106 may also be referred to as user equipments (user equipments, UEs), mobile stations (mobile stations, MSs), mobile terminals (mobile terminals, MTs), access terminals, subscriber units, subscriber stations, mobile stations, remote stations, remote terminals, mobile devices, user terminals, terminals, wireless communication devices, user agents, user apparatuses, or the like, and are devices that provide voice or data connectivity for users, or may be Internet of things devices. For example, the terminal devices 101 to 106 include a handheld device, a vehicle-mounted device, and the like that have a wireless communication function. Currently, the terminal devices 101 to 106 each may be a mobile phone (mobile phone), a tablet computer, a notebook computer, a palmtop computer, a mobile Internet device (mobile Internet device, MID), a wearable device (for example, a smartwatch, a smart band, or a pedometer), a vehicle-mounted device (for example, an automobile, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), flight equipment (for example, an intelligent robot, a hot air balloon, an uncrewed aerial vehicle, or an airplane), or the like. The terminal devices 101 to 106 may alternatively be other devices having a terminal function. For example, the terminal devices 101 to 106 may alternatively be devices that function as terminals in D2D communication.

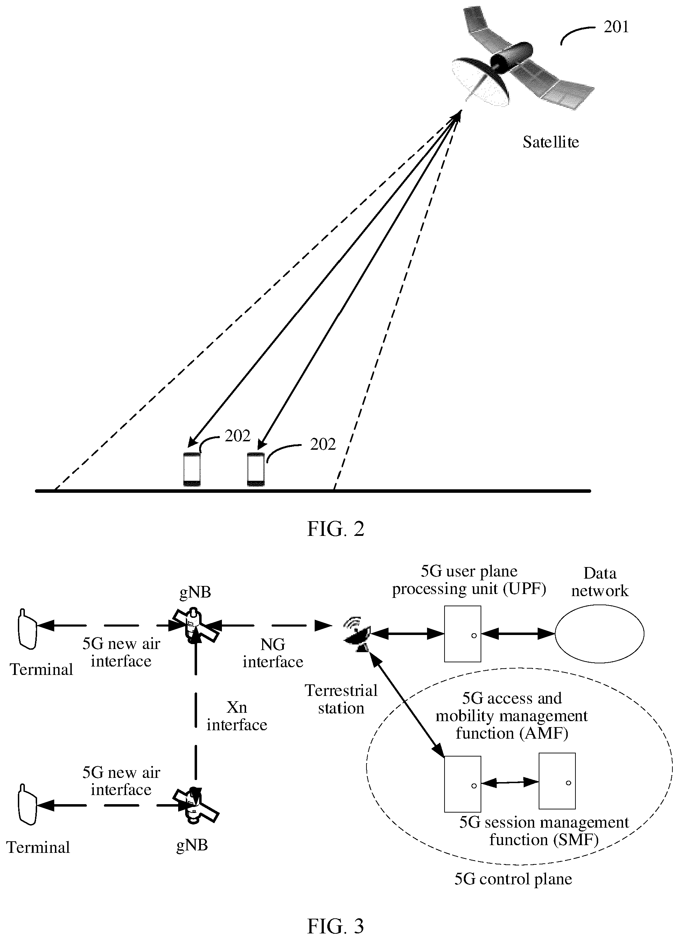

Based on the descriptions of the architecture of the terrestrial communication system shown in FIG. 1, an example in which embodiments of this application may be applied to a non-terrestrial network (non-terrestrial network, NTN) communication system is used for description. An NTN includes a satellite network, a high-altitude platform, an uncrewed aerial vehicle, and the like, is significantly characterized by global coverage, long-distance transmission, flexible networking, easy deployment, being not limited by geographical conditions, and the like, and has been widely applied to a plurality of fields such as maritime communication, positioning and navigation, disaster relief, scientific experiments, video broadcasting, and earth observation. A terrestrial 5G network, the satellite network, and the like are converged and complement each other, to jointly form a space-air-ground-sea integrated communication network that provides globally seamless coverage, and meet a plurality of ubiquitous service requirements of users. An example in which NTN communication is satellite communication, in other words, the NTN communication system is a satellite system is used in embodiments of this application. As shown in FIG. 2, the NTN communication system includes a satellite 201 and terminal devices 202. For explanations of the terminal device 202, refer to the foregoing related descriptions of the terminal devices 101 to 106. The satellite 201 may also be referred to as a high-altitude platform, a high-altitude aircraft, or a satellite base station. If the NTN communication system is compared with a terrestrial network communication system, the satellite 201 may be considered as one or more network devices in an architecture of the terrestrial network communication system. The satellite 201 provides a communication service for the terminal device 202, and the satellite 201 may be further connected to a core network device. For a structure and a function of the satellite 201, refer to the foregoing descriptions of the network device 110. For a mode of communication between the satellite 201 and the terminal device 202, also refer to the foregoing descriptions in FIG. 1. Details are not described herein again. The solutions in embodiments of this application may also be directly applied to a terrestrial communication network, or may be applied to a terrestrial communication network after being slightly modified in a method that can be figured out by a person skilled in the art. Details are not described herein.

Using 5G as an example, an architecture of a 5G satellite communication system is shown in FIG. 3. A terrestrial terminal device accesses a network through a 5G new air interface. A gNB is deployed on a satellite, and is connected to a terrestrial core network through a radio link. In addition, a radio link exists between satellites, to complete signaling exchange and user data transmission between gNBs. Devices and interfaces in FIG. 3 are described as follows:

The 5G core network provides user access control, mobility management, session management, user security authentication, accounting, and the like. The 5G core network includes a plurality of functional units, and the functional units may be classified into control-plane functional entities and data-plane functional entities. An access and mobility management function (AMF) is responsible for user access management, the security authentication, and the mobility management. A user plane function (UPF) is responsible for managing user plane data transmission, traffic statistics collection, and the like.

A terrestrial station is responsible for forwarding signaling and service data between the satellite gNB and the 5G core network.

The 5G new air interface is a radio link between the terminal and the gNB.

An Xn interface is an interface between the gNBs, and is mainly for signaling exchange such as handover.

An NG interface is an interface between the gNB and the 5G core network, and is mainly for exchanging NAS signaling or the like of the core network and service data of a user.

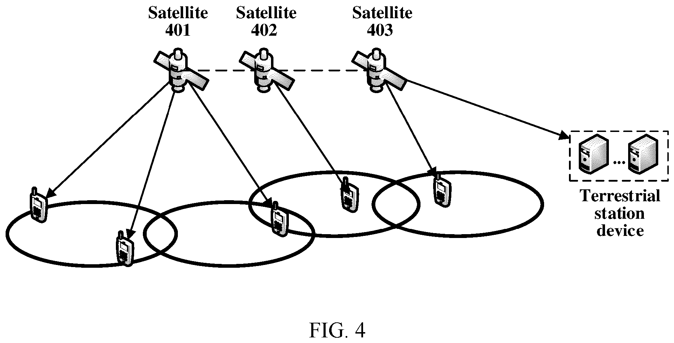

FIG. 4 is a diagram of an architecture of another possible satellite communication system to which this application is applicable. If the satellite communication system is compared with a terrestrial communication system, a satellite may be considered as one or more terrestrial network devices, for example, a base station, an access point 1, an access point 2, or even an access point 3 to an access point n (not shown in the figure). The satellite provides a communication service for a terminal device, and the satellite may be further connected to a core network device (for example, an access and mobility management function (access and mobility management function, AMF)). The satellite may be a low earth orbit (low earth orbit, LEO) satellite or a non-geostationary earth orbit (non-geostationary earth orbit, NGEO) satellite.

For example, the satellite communication system in FIG. 4 includes a satellite 401, a satellite 402, and a satellite 403. Each satellite may provide a communication service, a navigation service, a positioning service, and the like for the terminal device through a plurality of beams. The satellite in this scenario may be the LEO satellite. The satellite uses a plurality of beams to cover a service zone, and different beams may be for performing communication in one or more manners of time division, frequency division, and space division. The satellite performs wireless communication with the terminal device by broadcasting a communication signal, a navigation signal, and the like. The satellite may perform wireless communication with a terrestrial station device. As shown in FIG. 4, the satellite 403 is connected to the terrestrial station device. The satellite in embodiments of this application may be a satellite base station, may include an orbit receiver or a repeater configured to relay information, or is a network-side device mounted on a satellite.

Some examples of the terrestrial station device are: a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for a user equipment (UE), bears a data service, and so on. The CN may further include an access and mobility management function (access and mobility management function, AMF), a session management function (session management function, SMF), an authentication server function (authentication server function, AUSF), a policy control function (policy control function, PCF), a user plane function (user plane function, UPF), and the like. The AMF network element is configured to manage access and mobility of the UE, and is mainly responsible for UE authentication, UE mobility management, UE paging, and the like.

The satellite communication system includes a transparent satellite architecture and a non-transparent satellite architecture. Transparent transmission is also referred to as bent-pipe forwarding transmission, to be specific, only frequency conversion, signal amplification, and the like are performed on a signal on a satellite, and the satellite is transparent to the signal. Non-transparent transmission is also referred to as regenerative (with on-board access/processing) transmission, to be specific, a satellite has a part or all of functions of a base station. For example, the satellite 401 and the satellite 402 in FIG. 4 are in the non-transparent satellite architecture, and the satellite 403 is in the transparent satellite architecture. In addition, the satellite may work in a quasi earth-fixed mode or a satellite-fixed mode.

The network device in the terrestrial communication system and the satellite in the NTN communication system are collectively considered as network devices. An apparatus configured to implement a function of a network device may be a network device, or may be an apparatus, for example, a chip system, that can support a network device to implement the function, where the apparatus may be mounted in the network device. When the technical solutions provided in embodiments of this application are described below, an example in which the apparatus configured to implement the function of the network device is a satellite is used to describe the technical solutions provided in embodiments of this application. It may be understood that, when the method provided in embodiments of this application is applied to the terrestrial network communication system, an action performed by the satellite may be performed by the base station or the network device.

In embodiments of this application, an apparatus configured to implement a function of a terminal device may be a terminal device, or may be an apparatus, for example, a chip system, a hardware circuit, a software module, or a combination of a hardware circuit and a software module, that can support a terminal device to implement the function, where the apparatus may be mounted in the terminal device or used in collaboration with the terminal device. In embodiments of this application, the chip system may include a chip, or may include a chip and another discrete component. In the technical solutions provided in embodiments of this application, an example in which the apparatus configured to implement the function of the terminal device is the terminal device is used to describe the technical solutions provided in embodiments of this application.

For ease of understanding of embodiments of this application, an application scenario of this application is described below. A service scenario described in embodiments of this application is intended to describe the technical solutions in embodiments of this application more clearly, and does not constitute a limitation on the technical solutions provided in embodiments of this application. It can be learned by a person of ordinary skill in the art that, with emergence of a new service scenario, the technical solutions provided in embodiments of this application are also applicable to a similar technical problem.

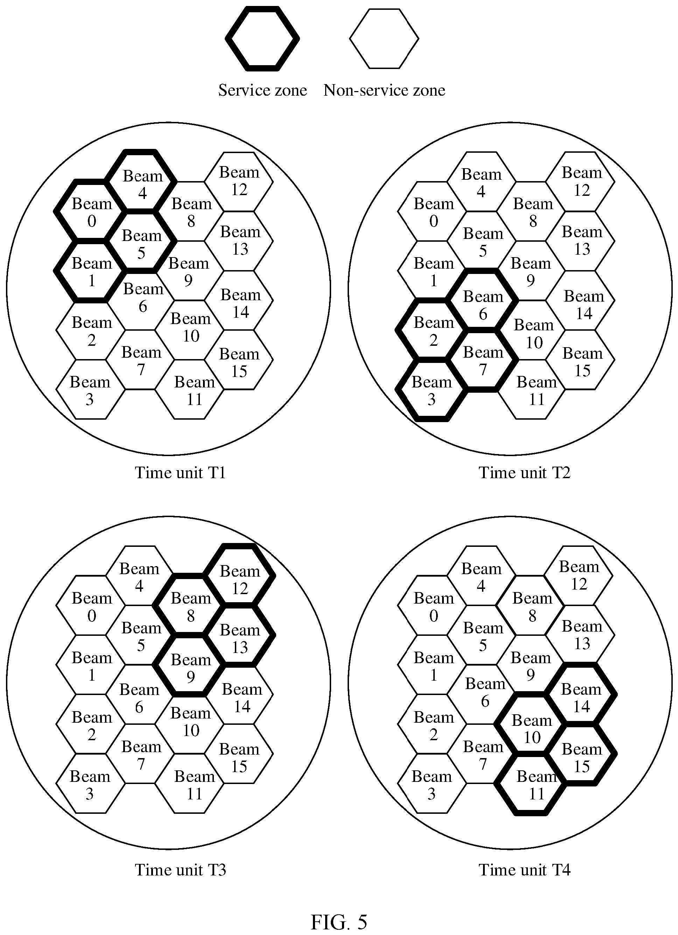

One satellite may cover thousands or even tens of thousands of kilometers, and one beam may cover tens or even thousands of kilometers. To support wide-zone coverage of a satellite, tens, hundreds, or even more beams usually need to be configured for the satellite. To alleviate a contradiction between a small payload and wide coverage of a single satellite, zone coverage may be performed through beam hopping. To be specific, a large quantity of beams may be configured for one satellite to cover a wide zone, but only a small quantity of beams are used in a same time unit to perform zone coverage. The wide zone is covered by using a plurality of beams used in different time units. For example, refer to FIG. 5. 16 beams are configured for one satellite to cover a wide zone, but only four beams are used in one time unit to perform zone coverage. In a time unit T1, four beams numbered 0, 1, 4, and 5 are used for zone coverage. In a time unit T2, four beams numbered 2, 3, 6, and 7 are used for zone coverage. The rest can be deduced by analogy. All zones (namely, zones corresponding to the 16 beams) covered by the single satellite are served through time division into T1, T2, T3, and T4. One time unit may be dozens of milliseconds, several milliseconds, or even at a smaller time granularity. In a satellite communication network, a plurality of beams are configured for one satellite, and each beam may be considered as a beam in one cell or one separate cell. A satellite beam is a shape formed on a surface of the earth by an electromagnetic wave emitted by a satellite antenna, and has a specific range like a light beam of a flashlight. Alternatively, a signal emitted by a satellite is a signal wave centrally emitted in a specific direction instead of 360° radiation.

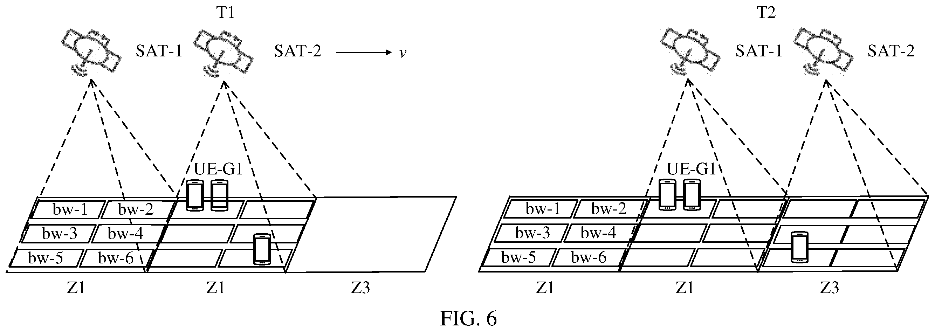

In a beam-hopping satellite communication system, movement of a satellite causes group handover of terminal devices in a specific zone (zone). As shown in FIG. 6, a UE cluster in a single beam position in a zone Z2 is denoted as UE-G1, and UE-G1 includes a plurality of UEs. In a period of time T1, UE-G1 is served by one or more beams of a satellite SAT-2. In a period of time T2, the beam position cannot be served due to movement of the satellite SAT-2, and UE-G1 is served by one or more beams of a satellite SAT-1. Therefore, UE-G1 performs group handover. In addition, because the satellite moves at a high speed of approximately 7.5 km/s, frequency of group handover is approximately once/several seconds to dozens of seconds. In other words, in the beam-hopping satellite system, it is normal to trigger terminal device group handover by movement of a satellite. The terminal device group handover may also be described as UE group handover, user group handover, or the like.

Currently, cell handover in a terrestrial network is mainly triggered by movement of a terminal device. Generally, a network device may send measurement configurations corresponding to a serving cell and a neighboring cell to the terminal device, and the UE measures cell signal quality, for example, reference signal received power (reference signal received power, RSRP) and/or reference signal received quality (reference signal received quality, RSRQ), based on the measurement configurations. The terminal device reports measurement results to the network device, and the network device selects an appropriate neighboring cell based on the received measurement results, and exchanges context information, admission control, a reserved resource, and the like that are related to user handover. Then, the network device sends handover-related control information to the terminal device via the serving cell, and completes an access procedure in the new cell. If an existing cell handover design is applied to the beam-hopping satellite system, efficiency and a success rate of group handover caused by movement of a satellite are low. For example, group handover may occur every several seconds to dozens of seconds, a periodicity of the group handover is long, and massive terminal devices need to occupy intensive access resources to simultaneously perform group handover to access a same cell. However, currently, a periodicity of handover triggered by movement of a terminal device is short, and a small access resource is occupied by a single terminal device to perform handover. This cannot meet requirements of the foregoing group handover for a long periodicity and intensive access resources.

Based on this, embodiments of this application provide a random access resource determining method. The method may be applied to a group handover scenario mainly caused by movement of a satellite, to determine a dedicated random access resource for terminal device group handover.

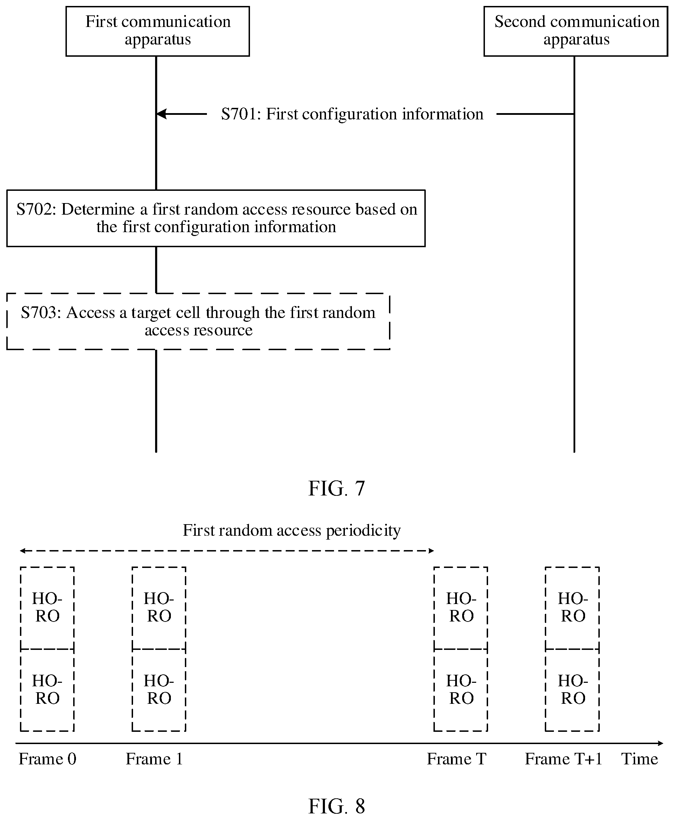

As shown in FIG. 7, the random access resource determining method provided in this application is described by using interaction between a first communication apparatus and a second communication apparatus as an example. The first communication apparatus may be a terminal device, and the second communication apparatus may be a network device or a source serving cell that provides a service for the terminal device on a network side. The method mainly includes the following procedure:

S701: The second communication apparatus sends first configuration information to the first communication apparatus.

The first configuration information is for configuring random access channel occasions (random access channel occasions, ROs) in N consecutive frames within a first random access periodicity. N is a positive integer greater than or equal to 1. It may be understood that the first random access periodicity includes a plurality of frames, and the random access channel occasions in the N consecutive frames may form intensive random access resources, to be usable in a group handover scenario caused by movement of a satellite. To be distinguished from a RO for initial access, the RO in the N frames in this embodiment of this application may also be referred to as a HO-RO, and the HO-RO may be a group handover-specific RO. The first random access periodicity is usually greater than a second random access periodicity for the initial access.

Optionally, the second communication apparatus may send, to the first communication apparatus in a unicast manner, one or more of a radio resource control (radio Resource control, RRC) reconfiguration (Reconfiguration) message, a media access control-control element (media access control-control element, MAC CE), downlink control information (downlink control information, DCI), or the like that include the first configuration information. In the unicast manner, a UE-level access resource may be configured. For example, access resources are separately configured for terminal devices to meet access requirements of different terminal devices. Alternatively, the second communication apparatus may include the first configuration information in a related system information block (system information block, SIB), a group downlink control message (group DCI), or the like in a broadcast manner. In the broadcast manner, access resources may be configured for a group of terminal devices that have similar attributes (for example, close handover moments), so that signaling overheads can be reduced.

Optionally, the second communication apparatus may indicate a start frame, an end frame, or the like in the N frames and a quantity of the consecutive frames, namely, a value of N, so that the first communication apparatus determines, based on the indication, the frames occupied by the ROs within the first random access periodicity. For example, the first configuration information includes first information and second information, the first information is for determining the start frame or the end frame in the N consecutive frames within the first random access periodicity, and the second information includes information about the value of N. In addition, the first configuration information may further include a time-frequency resource, a polarization mode, or the like of a RO in a frame. Optionally, there may be one or more ROs in one frame, and quantities and time-frequency resource information of ROs in the N frames are the same.

The following describes in detail implementations of the first information and the second information in the first configuration information.

In an optional implementation, the first information may include a number of a reference frame, and the second information may include the value of N. A specified frame in the N consecutive frames within the first random access periodicity and the reference frame satisfy a specific relational expression. The specified frame may be the start frame, the end frame, or a frame between the start frame and the end frame in the N frames. The relational expression may be predefined, or may be negotiated between the first communication apparatus and the second communication apparatus. The following describes the relational expression by using examples.

Example 1: A number n_f_NTN of the start frame (or the end frame) in the N consecutive frames within the first random access periodicity and a number M of the reference frame satisfy the following relational expression (1):

$$n_f_NTN \bmod (M*x)=y \quad (1),$$

where 0≤|F_NTN-n_f_NTN|≤N-1.

mod represents a modulo operator, and x and y are preconfigured positive integers. Optionally, a candidate value list may be preconfigured for values of x and y. The candidate value list includes a plurality of groups of values of x and y, and each group of values corresponds to one value identifier. In an optional implementation, the first communication apparatus and the second communication apparatus may negotiate a group of values of x and y in advance. In another optional implementation, the second communication apparatus may send third information including a value identifier to the first communication apparatus, to indicate a group of values of x and y to the first communication apparatus. For example, the second communication apparatus may send the first configuration information including the third information to the first communication apparatus. For another example, the second communication apparatus may separately send the third information to the first communication apparatus.

F_NTN represents a number of any frame in the N frames, and numbers of the N consecutive frames form a frame number set represented as {F_NTN}. The numbers of the N consecutive frames are referred to as {F_NTN} for short, in other words, {F_NTN} includes a number of each of the N consecutive frames. |F_NTN-n_NTN| represents an absolute value of (F_NTN-n_f_NTN). It may be understood that a relationship between the number F_NTN of any frame in the N consecutive frames and n_f_NTN may alternatively be represented in a form other than 0≤|F_NTN-n_f_NTN|≤N-1, for example, represented as F_NTN∈[n_f_NTN, n_f_NTN+N-1].

Based on this, when receiving the first information, the second information, and the third information, the first communication apparatus may obtain values of M, x, and y in the relational expression (1), to determine n_f_NTN that satisfies the relational expression (1). There may be one or more values of n_f_NTN that satisfy the relational expression (1). When there are a plurality of values of n_f_NTN, the first communication apparatus may consider frames between two adjacent values of n_f_NTN as one random access periodicity. In other words, it may be further understood that there are one or more first random access periodicities described in this embodiment of this application, a plurality of values of n_f_NTN are obtained according to the relational expression (1), frames between every two adjacent values of n_f_NTN form one first random access periodicity, and a plurality of first random access periodicities are consecutive. As shown in FIG. 8, frames occupied by ROs within each random access periodicity in the plurality of first random access periodicities include two consecutive frames, and each frame includes one or more HO-ROs. In FIG. 8, each frame includes two HO-ROs.

For example, when a group of values of x and y is that x=16 and y=1, and the number M of the reference frame is 1000, n_f_NTN that satisfies the relational expression (1) may be 1, 16001, 32001, 48001, or the like, and there are a plurality of first random access periodicities. When n_f_NTN is the number of the start frame in the N frames, and N is 3, the N frames within the plurality of first random access periodicities are respectively frames 1 to 3, frames 16001 to 16003, frames 32001 to 32003, frames 48001 to 48003, and the like.

In this design, the first random access periodicity may be understood as a RO time domain periodicity obtained through extension based on the reference frame, and a long periodicity needed for group handover caused by a satellite network is achieved by extending a RO time domain periodicity. In addition, a plurality of consecutive frames are configured to achieve intensive RO time domain resources specific to the group handover, to facilitate efficiency and a success rate of the group handover caused by the movement of the satellite.

Example 2: A number n_f_NTN of the start frame (or the end frame) in the N consecutive frames within the first random access periodicity and a number M of the reference frame satisfy the following relational expression (2):

$$n_f_NTN \bmod (2^{M}*x)=y \quad (2),$$

where 0≤|F_NTN-n_f_NTN|≤N-1.

For definitions of mod, x, y, and F_NTN, refer to the descriptions in the example 1 for understanding. Details are not described in this embodiment of this application again.

Based on this, when receiving the first information, the second information, and the third information, the first communication apparatus may obtain values of M, x, and y in the relational expression (2), to determine n_f_NTN that satisfies the relational expression (2). There may be one or more values of n_f_NTN that satisfy the relational expression (2). When there are a plurality of values of n_f_NTN, the first communication apparatus may consider frames between two adjacent values of n_f_NTN as one random access periodicity. In other words, it may be further understood that there are one or more first random access periodicities described in this embodiment of this application, a plurality of values of n_f_NTN are obtained according to the relational expression (2), frames between every two adjacent values of n_f_NTN form one first random access periodicity, and a plurality of first random access periodicities are consecutive. As shown in FIG. 8, frames occupied by ROs within each random access periodicity in the plurality of first random access periodicities include the N consecutive frames, and each frame includes one or more HO-ROs. In FIG. 8, each frame includes two HO-ROs. It may be understood that the first random access periodicity is a RO time domain periodicity obtained through extension based on the reference frame.

For example, when a group of values of x and y is that x=16 and y=1, and the number M of the reference frame is 9, n_f_NTN that satisfies the relational expression (1) may be 1, 8193, 16385, 24577, or the like, and there are a plurality of first random access periodicities. When n_f_NTN is the number of the start frame in the N frames, and N is 4, the N frames within the plurality of first random access periodicities are respectively frames 1 to 4, frames 8193 to 8196, frames 16385 to 16388, frames 24577 to 24580, and the like. According to this design, signaling overheads for indicating the reference frame in the first configuration information can be reduced.

In another optional implementation, the first information may include a number of a reference frame and a first offset, and the second information includes the value of N. The reference frame and the first offset may be understood based on descriptions in one of A1 or A2 below.

A1. A start frame (or an end frame) in N' consecutive frames within the first random access periodicity and a reference frame satisfy a specific relational expression. For example, n_f_NTN in the foregoing relational expression (1) or relational expression (2) may be replaced with a number n_f_NTN' of the start frame (or the end frame) in the N' consecutive frames within the first random access periodicity, and it may be understood that n_f_NTN' and the number M of the reference frame satisfy n_f_NTN' mod (M*x)=y or n_f_NTN' mod ($2^{M}$*x)=y. The foregoing first offset indicates an offset of the start frame (or the end frame) in N* frames, and is for avoiding a resource conflict between the RO configured in the first configuration information and the RO for the initial access. The N consecutive frames configured in the first configuration information may be obtained through deviation of the N' consecutive frames for the first offset. To be specific, N' is equal to N, and a difference between the start frame in the N frames and the start frame in the N' frames is the first offset, or a difference between the end frame in the N frames configured in the first configuration information and the end frame in the N' frames is the first offset.

Optionally, the first offset may be in a unit of a slot. For example, when slots occupied by ROs in the N' frames include $1^{st}$, $3^{rd}$, and $5^{th}$ slots, and the first offset is one slot, slots occupied by the ROs in the N frames include $2^{nd}$, $4^{th}$, and $6^{th}$ slots. Alternatively, the first offset may be in a unit of a subframe or a frame. For example, when subframes occupied by ROs in the N' frames include $2^{nd,}$ $4^{th}$, $6^{th}$, and $8^{th}$ subframes, and the first offset is two subframes, subframes occupied by the ROs in the N frames include $4^{th}$, $6^{th}$, $8^{th}$, and $10^{th}$ subframes.

A2. The start frame (or the end frame) in the N consecutive frames within the first random access periodicity, the reference frame, and the first offset satisfy a specific relational expression. The relational expression may be predefined, or may be negotiated between the first communication apparatus and the second communication apparatus. The following describes the relational expression by using examples.

Example 3: A number n_f_NTN of the start frame (or the end frame) in the N consecutive frames within the first random access periodicity, a number M of the reference frame, and a first offset R satisfy the following relational expression (3):

$$(n_f_NTN-R) \bmod (M*x)=y \quad (3),$$

where 0≤|F_NTN-n_f_NTN|≤N-1.

For definitions of mod, x, y, and F_NTN, refer to the descriptions in the example 1 for understanding. Details are not described in this embodiment of this application again.

Based on this, when receiving the first configuration information, the first communication apparatus may obtain values of M, x, y, and R in the relational expression (3), to determine n_f_NTN that satisfies the relational expression (3). Optionally, the value of R is an integer, for example, a positive integer, 0, or a negative integer. It may be understood that, when R is a positive integer, it indicates that (n_f_NTN-R) that satisfies the relational expression (3) is deviated backward in terms of time to obtain n_f_NTN; and when R is a negative integer, it indicates that (n_f_NTN-R) that satisfies the relational expression (3) is deviated forward in terms of time to obtain n_f_NTN.

There may be one or more values of n_f_NTN that satisfy the relational expression (3). When there are a plurality of values of n_f_NTN, the first communication apparatus may consider frames between two adj acent values of n_f_NTN as one random access periodicity. In other words, it may be further understood that there are one or more first random access periodicities described in this embodiment of this application, a plurality of values of n_f_NTN are obtained according to the relational expression (3), frames between every two adjacent values of n_f_NTN form one first random access periodicity, and a plurality of first random access periodicities are consecutive. As shown in FIG. 8, frames occupied by ROs within each random access periodicity in the plurality of first random access periodicities include the N consecutive frames, and each frame includes one or more HO-ROs. In FIG. 8, each frame includes two HO-ROs.

Example 4: A number n_f_NTN of the start frame (or the end frame) in the N consecutive frames within the first random access periodicity, a number M of the reference frame, and a first offset R satisfy the following relational expression (4):

$$(\text{n_f_NTN}-\text{R}) \bmod (2^{\text{M}} * \text{x}) = \text{y} \quad (4),$$

where $0 \leq |\text{F_NTN}-\text{n_f_NTN}| \leq \text{N}-1$.

For definitions of mod, x, y, and F_NTN, refer to the descriptions in the example 1 for understanding. Details are not described in this embodiment of this application again.

Based on this, when receiving the first configuration information, the first communication apparatus may obtain values of M, x, y, and R in the relational expression (4), to determine n_f_NTN that satisfies the relational expression (4). Optionally, the value of R is an integer, for example, a positive integer, 0, or a negative integer. It may be understood that, when R is a positive integer, it indicates that (n_f_NTN-R) that satisfies the relational expression (4) is deviated backward in terms of time to obtain n_f_NTN; and when R is a negative integer, it indicates that (n_f_NTN-R) that satisfies the relational expression (4) is deviated forward in terms of time to obtain n_f_NTN.

There may be one or more values of n_f_NTN that satisfy the relational expression (4). When there are a plurality of values of n_f_NTN, the first communication apparatus may consider frames between two adjacent values of n_f_NTN as one random access periodicity. In other words, it may be further understood that there are one or more first random access periodicities described in this embodiment of this application, a plurality of values of n_f_NTN are obtained according to the relational expression (4), frames between every two adjacent values of n_f_NTN form one first random access periodicity, and a plurality of first random access periodicities are consecutive. As shown in FIG. 8, frames occupied by ROs within each random access periodicity in the plurality of first random access periodicities include the N consecutive frames, and each frame includes one or more HO-ROs. In FIG. 8, each frame includes two HO-ROs.

In the foregoing design, the first offset is introduced, so that a limitation imposed by the relational expression may be removed, and more frame configurations of ROs applicable to the group handover can be obtained through extension, to avoid a conflict with a RO resource for the initial access. This facilitates efficiency and a success rate of the group handover caused by the movement of the satellite.

In addition, it may be understood that M is merely used as an example of representing the number of the reference frame, and this embodiment of this application is not limited to the expression of M, in other words, another character or field name may represent the number of the reference frame. For example, M in the foregoing examples 1 to 4 may be replaced with prach-ConfigurationPeriodScaling-NTN. N is merely used as an example of representing the quantity of frames in which the ROs are located, and this embodiment of this application is not limited to the expression of N, in other words, another character or field name may represent the quantity of frames in which the ROs are located. For example, N in the foregoing examples 1 to 4 may be replaced with prach-ConfigurationFrameScaling-NTN. Similarly, the first offset R is also merely used as an example of representing the frame offset, and this embodiment of this application is not limited to the expression of R, in other words, another character or field name may represent the frame offset. For example, R in the foregoing examples 3 and 4 may be replaced with prach-ConfigurationSoffset-NTN.

Optionally, in the example 1 or example 3, a value range of prach-ConfigurationPeriodScaling-NTN may include {1024, 2048, ..., 131072}. In the example 2 or example 4, a value range of prach-ConfigurationPeriodScaling-NTN may include {0, 1, 2, ..., 9, 10, ..., 17}. In the example 1 to example 4, a value range of prach-ConfigurationFrameScaling-NTN includes {1, 2, 4, 8, 16, 32}, and a value range of prach-ConfigurationSoffset-NTN includes {0, 1, ..., 128}.

During specific implementation, the second communication apparatus may determine, based on an NTN network configuration, values of prach-ConfigurationPeriodScaling-NTN and prach-ConfigurationFrameScaling-NTN that are configured in the first configuration information. In this design, a RO configuration that adapts to a plurality of different NTN network scenarios may be implemented. For example, a larger altitude of an operating orbit of the satellite indicates a longer first random access periodicity (or referred to as a longer group handover periodicity), larger extension of the RO time domain periodicity, namely, a larger value of prach-ConfigurationPeriodScaling-NTN, and a smaller value of the quantity prach-ConfigurationFrameScaling-NTN of the consecutive frames in which the ROs are located. For example, larger inclination of an operating orbit of the satellite indicates a shorter first random access periodicity, smaller extension of the RO time domain periodicity, namely, a smaller value of prach-ConfigurationPeriodScaling-NTN, and a larger value of the quantity prach-ConfigurationFrameScaling-NTN of the consecutive frames in which the ROs are located. For another example, a group handover periodicity for performing handover as a whole in the group handover scenario becomes longer, extension of the RO time domain periodicity becomes larger, in other words, the value of prach-ConfigurationPeriodScaling-NTN becomes larger, and the value of the quantity prach-ConfigurationFrameScaling-NTN of the consecutive frames in which the ROs are located becomes larger.

With reference to the value range of each parameter in the foregoing example 2 or 4, Table 1 enumerates some NTN network configurations and corresponding values of prach-ConfigurationPeriodScaling-NTN and prach-ConfigurationFrameScaling-NTN.

Table 1

| NTN network configuration | | prach-ConfigurationPeriodScaling-NTN | prach-ConfigurationFrameScaling-NTN |
|---|---|---|---|
| Orbital altitude | 600 km | 12 | 4 |
| | 1200 km | 14 | 2 |
| Minimum communication elevation angle | 10° | 11 | 4 |
| | 30° | 8 | 8 |
| Handover mode | Handover as a whole | 16 | 32 |
| | Handover in batches | 2 | 2 |

S702: The first communication apparatus determines a first random access resource based on the first configuration information.

In an optional implementation, the first communication apparatus may determine, as the first random access resource, the random access channel occasions that are in the N consecutive frames within the first random access periodicity and that are obtained from the first configuration information through parsing. In other words, the first random access resource may include the random access channel occasions in the N consecutive frames within the first random access periodicity. A quantity of first random access periodicities corresponds to a quantity of start frames (end frames) in the N frames that is calculated according to the foregoing relational expression, and there are one or more first random access periodicities.

In another optional implementation, the second communication apparatus may further include fourth information in the first configuration information, where the fourth information indicates an association relationship between at least one handover beam of the first communication apparatus and a random access channel occasion within the first random access periodicity. The first communication apparatus may autonomously select a target handover beam, determine, based on the fourth information, a random access channel occasion associated with the target handover beam, and determine that the first random access resource includes the random access channel occasion associated with the target handover beam. Alternatively, the second communication apparatus may include fourth information and identification information of a target handover beam in the first configuration information. The first communication apparatus determines, based on the fourth information and the identification information of the target handover beam, that the first random access resource includes a random access channel occasion that is within the first random access periodicity and that is associated with the target handover beam. In this design, the first communication apparatus uses the random access channel occasion (HO-RO) associated with the target handover beam, so that a collision probability during the group handover can be reduced.

Optionally, the handover beam may be a handover-specific broadcast beam of the first communication apparatus, and identification information of a handover beam may be represented as an HO-SSB index, where the index is an integer. The handover beam of the first communication apparatus may be denoted as HO-SSBO, HO-SSB1, HO-SSB2, and so on.

Optionally, HO-RO resources that are associated with handover beams and that are in the N frames within the first random access periodicity may have a same size. For example, the fourth information may include HO-ssb-perRACH-Occasion. HO-ssb-perRACH-Occasion indicates a proportion of a HO-RO resource that is associated with each handover beam and that is in the N frames within the first random access periodicity. For example, all HO-RO resources in the N frames within the first random access periodicity are denoted as P, and a value of HO-ssb-perRACH-Occasion is $\frac{1}{K}$, to indicate that each handover beam is associated with $\frac{1}{K}$ in P. A HO-RO resource corresponding to HO-SSBO is $[0{:}P*\frac{1}{K})$, a HO-RO resource corresponding to HO-SSB1 is $[P*\frac{1}{K}{:}P*\frac{2}{K})$, and a HO-RO resource corresponding to HO-SSB2 is $[P*\frac{2}{K}{:}P*\frac{3}{K})$. The rest can be deduced by analogy. Alternatively, if one or more HO-ROs exist in each of the N frames within the first random access periodicity, and a resource size of each HO-RO is fixed and the same, handover beams may be set to be associated with a same quantity of HO-ROs in all HO-ROs in the N frames within the first random access periodicity.

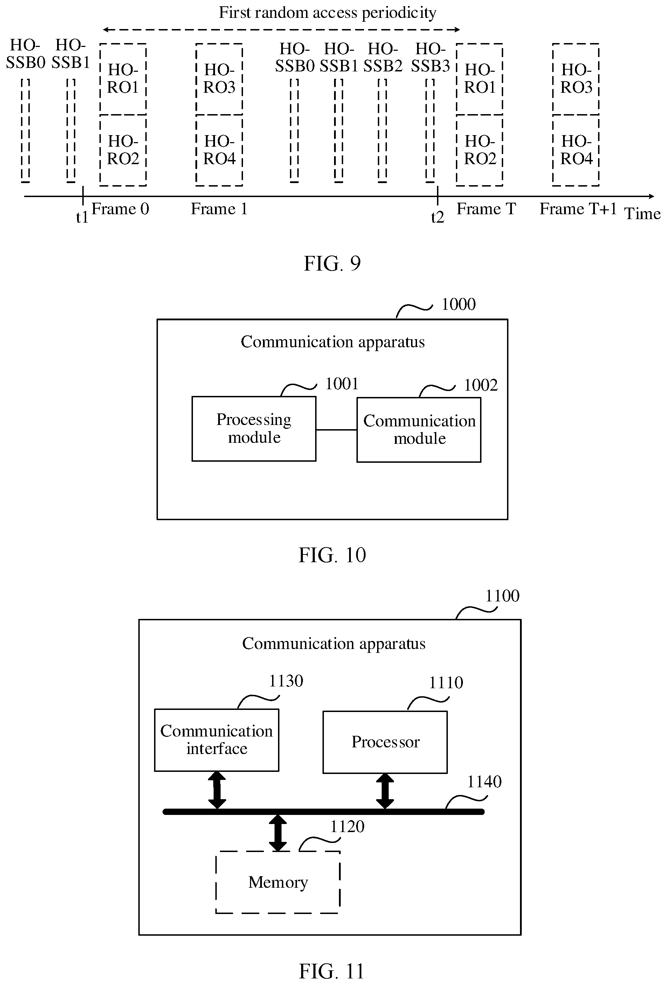

For example, on the basis of FIG. 8, FIG. 9 shows that both HO-SSBO and HO-SSB1 are associated with two HO-ROs at a moment t1. For example, HO-SSBO is associated with HO-RO1 and HO-RO2. If the first communication apparatus selects HO-SSBO, access may be performed on HO-RO 1 and HO-RO2 at the moment t1. HO-SSB1 is associated with HO-RO3 and HO-RO4. If the first communication apparatus selects HO-SSB1, access may be performed on HO-RO3 and HO-RO4 at the moment t1. FIG. 9 further shows that HO-SSBO, HO-SSB1, HO-SSB2, and HO-SSB3 are all associated with one HO-RO at a moment t2. For example, HO-SSBO is associated with HO-RO1. If the first communication apparatus selects HO-SSBO, access may be performed on HO-RO1 at the moment t2. HO-SSB1 is associated with HO-RO2. If the first communication apparatus selects HO-SSB1, access may be performed on HO-RO2 at the moment t2. HO-SSB2 is associated with HO-RO3. If the first communication apparatus selects HO-SSB2, access may be performed on HO-RO3 at the moment t2. HO-SSB3 is associated with HO-RO4. If the first communication apparatus selects HO-SSB3, access may be performed on HO-RO4 at the moment t2.

S703: The first communication apparatus accesses a target cell through the first random access resource.

In correspondence to the foregoing descriptions of S701 to S702, the first communication apparatus may access the target cell through the first random access resource during handover. The handover performed by the first communication apparatus may be determined by the first communication apparatus, or may be triggered because a device group corresponding to a zone in which the first communication apparatus is located performs cell handover. For example, when the movement of the satellite causes the group handover, the device group corresponding to the zone in which the first communication apparatus is located performs cell handover. In this case, the first communication apparatus needs to perform cell handover.

In an optional implementation, when there are a plurality of first random access periodicities, it may be understood that the first random access resource includes ROs configured in the plurality of first random access periodicities. The first communication apparatus may determine a handover moment, and access, by using a dedicated preamble (preamble), the target cell on a RO that is after the handover moment. In another optional implementation, when there are a plurality of first random access periodicities, it may be understood that the first random access resource includes ROs associated with the target handover beam that are in the plurality of first random access periodicities. The first communication apparatus may determine a handover moment, and access, by using a dedicated preamble (preamble), the target cell on a RO that is associated with the target handover beam and that is after the handover moment.

Based on a same idea, an embodiment of this application provides a communication apparatus 1000. Refer to FIG. 10. The communication apparatus 1000 includes a processing module 1001 and a communication module 1002. The communication apparatus 1000 may be a second communication apparatus, or may be a communication apparatus that is used in the second communication apparatus or used in collaboration with the second communication apparatus and that can implement a method performed on a second communication apparatus side. Alternatively, the communication apparatus 1000 may be a first communication apparatus, or may be a communication apparatus that is used in the first communication apparatus or used in collaboration with the first communication apparatus and that can implement a method performed on a first communication apparatus side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the second communication apparatus side or the first communication apparatus side in the foregoing method. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit.

When the communication apparatus 1000 is used in the first communication apparatus, the processing module 1001 may be configured to implement a processing function of the first communication apparatus in the example in FIG. 7, and the communication module 1002 may be configured to implement a receiving function and a sending function of the first communication apparatus in the example in FIG. 7. Alternatively, the communication apparatus may be understood with reference to the descriptions and the possible designs in the third aspect in the summary.

When the communication apparatus 1000 is used in the second communication apparatus, the processing module 1001 may be configured to implement a processing function of the second communication apparatus in the example in FIG. 7, and the communication module 1002 may be configured to implement a receiving function and a sending function of the second communication apparatus in the example in FIG. 7. Alternatively, the communication apparatus may be understood with reference to the descriptions and the possible designs in the fourth aspect in the summary.

In addition, it should be noted that the communication module and/or the processing module may be implemented by a virtual module. For example, the processing module may be implemented by a software functional unit or a virtual apparatus, and the communication module may be implemented by a software function or a virtual apparatus. Alternatively, the processing module or the communication module may be implemented by a physical apparatus. For example, if the apparatus is implemented by a chip/chip circuit, the communication module may be an input/output circuit and/or a communication interface, and perform an input operation (corresponding to the foregoing receiving operation) and an output operation (corresponding to the foregoing sending operation); and the processing module is an integrated processor, a microprocessor, or an integrated circuit.

Division into the modules in embodiments of this application is an example, is merely logical function division, and may be other division during actual implementation. In addition, the functional modules in the examples of embodiments of this application may be integrated into one processor, each of the functional modules may exist alone physically, or two or more functional modules may be integrated into one module. The integrated module may be implemented in a form of hardware, or may be implemented in a form of a software functional module.

Based on a same technical concept, an embodiment of this application further provides a communication apparatus 1100. For example, the communication apparatus 1100 may be a chip or a chip system. Optionally, in this embodiment of this application, the chip system may include a chip, or may include a chip and another discrete component.

The communication apparatus 1100 may be configured to implement a function of any network element in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of communication interface. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor is an integrated processor, a microprocessor, an integrated circuit, or a logic circuit. The processor may determine to-be-output information based on input information.

The coupling in this embodiment of this application may be an indirect coupling or a communication connection between apparatuses, units, or modules in an electrical form, a mechanical form, or another form, and is for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this embodiment of this application.

Optionally, refer to FIG. 11. The processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

In a possible implementation, the communication apparatus 1100 may be used in a first communication apparatus. Specifically, the communication apparatus 1100 may be the first communication apparatus, or may be an apparatus that can support the first communication apparatus to implement a function of the first communication apparatus in any one of the foregoing examples. The memory 1120 stores a computer program (or instructions) and/or data for implementing the function of the first communication apparatus in any one of the foregoing examples. The processor 1110 may execute the computer program stored in the memory 1120, to complete the method performed by the first communication apparatus in any one of the foregoing examples. When the communication apparatus 1100 is used in the first communication apparatus, the communication interface in the communication apparatus 1100 may be configured to interact with a second communication apparatus, and send information to the second communication apparatus or receive information from the second communication apparatus.

In another possible implementation, the communication apparatus 1100 may be used in a second communication apparatus. Specifically, the communication apparatus 1100 may be the second communication apparatus, or may be an apparatus that can support the second communication apparatus to implement a function of the second communication apparatus in any one of the foregoing examples. The memory 1120 stores a computer program (or instructions) and/or data for implementing the function of the second communication apparatus in any one of the foregoing examples. The processor 1110 may execute the computer program stored in the memory 1120, to complete the method performed by the second communication apparatus in any one of the foregoing examples. When the communication apparatus 1100 is used in the second communication apparatus, the communication interface in the communication apparatus 1100 may be configured to interact with a first communication apparatus, and send information to the first communication apparatus or receive information from the first communication apparatus.

The communication apparatus 1100 provided in this example may be used in the first communication apparatus to complete the method performed by the first communication apparatus, or may be used in the second communication apparatus to complete the method performed by the second communication apparatus. Therefore, for technical effects that can be achieved by the communication apparatus 1100, refer to the foregoing method examples. Details are not described herein again.

Based on the foregoing example, an embodiment of this application provides a communication system, including a first communication apparatus and a second communication apparatus. The first communication apparatus and the second communication apparatus may implement the method provided in the example shown in FIG. 7.

The technical solutions provided in embodiments of this application may be completely or partially implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, examples may be mutually referenced. For example, methods and/or terms in the method embodiments may be mutually referenced, functions and/or terms in the apparatus embodiments may be mutually referenced, and functions and/or terms in the apparatus examples and the method examples may be mutually referenced.

It is clear that, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A random access resource determining method, comprising:

   obtaining, by a first communication apparatus, first configuration information, wherein the first configuration information is for configuring random access channel occasions in N consecutive frames within a first random access periodicity, wherein N is an integer greater than 1; and
   determining, by the first communication apparatus, a first random access resource based on the first configuration information, wherein the first random access resource is used by the first communication apparatus to access a target cell.

2. The method according to claim 1, further comprising:
   accessing, by the first communication apparatus, the target cell through the first random access resource when the first communication apparatus performs cell handover.

3. The method according to claim 1, further comprising:
   accessing, by the first communication apparatus, the target cell through the first random access resource when a device group corresponding to a zone in which the first communication apparatus is located performs cell handover.

4. The method according to any one of claims 1 to 3, wherein the first configuration information comprises first information and second information, the first information is for determining a start frame in the N consecutive frames within the first random access periodicity, and the second information comprises information about a value of N.

5. The method according to claim 4, wherein the first information comprises a number M of a reference frame, and a number n_f_NTN of the start frame in the N consecutive frames within the first random access periodicity and the number M of the reference frame satisfy the following relational expression:

$$n_f_NTN \bmod (M*x)=y,$$

   wherein
   mod represents a modulo operator, and x and y are preconfigured positive integers.

6. The method according to claim 4, wherein the first information comprises a number M of a reference frame, and a number n_f_NTN of the start frame in the N consecutive frames within the first random access periodicity and the reference frame satisfy the following relational expression:

$$n_f_NTN \bmod (2^{M}*x)=y,$$

   wherein
   mod represents a modulo operator, and x and y are preconfigured positive integers.

7. The method according to claim 4, wherein the first information comprises a number M of a reference frame and a first offset R, and a number n_f_NTN of the start frame in the N consecutive frames within the first random access periodicity and the number M of the reference frame satisfy the following relational expression:

$$(n_f_NTN-R) \bmod (M*x)=y,$$

   wherein
   mod represents a modulo operator, and x and y are preconfigured positive integers.

**8.** The method according to claim 4, wherein the first information comprises a number M of a reference frame and a first offset R, and a number n_f_NTN of the start frame in the N consecutive frames within the first random access periodicity and the reference frame satisfy the following relational expression:

$$(n_f_NTN-R) \bmod (2^{M}*x)=y,$$

wherein
mod represents a modulo operator, and x and y are preconfigured positive integers.

**9.** The method according to any one of claims 5 to 8, further comprising: obtaining, by the first communication apparatus, third information, wherein the third information is for determining values of x and y.

**10.** The method according to any one of claims 1 to 8, wherein the first configuration information comprises fourth information, and the fourth information indicates an association relationship between at least one handover beam of the first communication apparatus and a random access channel occasion within the first random access periodicity.

**11.** The method according to claim 10, wherein the first random access resource comprises a random access channel occasion associated with a target handover beam of the first communication apparatus.

**12.** The method according to claim 11, wherein the first configuration information comprises identification information of the target handover beam.

**13.** The method according to any one of claims 1 to 12, wherein the first random access periodicity is greater than a second random access periodicity for initial access.

**14.** A random access resource determining method, comprising:

determining, by a second communication apparatus, first configuration information, wherein the first configuration information is for configuring random access channel occasions in N consecutive frames within a first random access periodicity, wherein N is an integer greater than 1; and
sending, by the second communication apparatus, the first configuration information to the first communication apparatus, wherein the first configuration information is for determining a first random access resource, and the first random access resource is used by the first communication apparatus to access a target cell.

**15.** The method according to claim 14, wherein the first configuration information comprises first information and second information, the first information is for determining a start frame in the N consecutive frames within the first random access periodicity, and the second information comprises information about a value of N.

**16.** The method according to claim 15, wherein the first information comprises a number M of a reference frame, and a number n_f_NTN of the start frame in the N consecutive frames within the first random access periodicity and the number M of the reference frame satisfy the following relational expression:

$$n_f_NTN \bmod (M*x)=y,$$

wherein
mod represents a modulo operator, and x and y are preconfigured positive integers.

**17.** The method according to claim 15, wherein the first information comprises a number M of a reference frame, and a number n_f_NTN of the start frame in the N consecutive frames within the first random access periodicity and the reference frame satisfy the following relational expression:

$$n_f_NTN \bmod (2^{M}*x)=y,$$

wherein
mod represents a modulo operator, and x and y are preconfigured positive integers.

**18.** The method according to claim 15, wherein the first information comprises a number M of a reference frame and a first offset R, and a number n_f_NTN of the start frame in the N consecutive frames within the first random access periodicity and the number M of the reference frame satisfy the following relational expression:

$$(n_f_NTN-R) \bmod (M*x)=y,$$

wherein
mod represents a modulo operator, and x and y are preconfigured positive integers.

**19.** The method according to claim 15, wherein the first information comprises a number M of a reference frame and a first offset R, and a number n_f_NTN of the start frame in the N consecutive frames within the first random access periodicity and the reference frame satisfy the following relational expression:

$$(n_f_NTN-R) \bmod (2^{M}*x)=y,$$

wherein
mod represents a modulo operator, and x and y are preconfigured positive integers.

**20.** The method according to any one of claims 16 to 19, further comprising: sending, by the second communication apparatus, third information, wherein the third information is for determining values of x and y.

**21.** The method according to any one of claims 16 to 19, wherein the first configuration information comprises fourth information, and the fourth information indicates an association relationship between at least one handover beam of the first communication apparatus and a random access channel occasion within the first random access periodicity.

**22.** The method according to claim 21, wherein the first random access resource comprises a random access channel occasion associated with a target handover beam of the first communication apparatus.

**23.** The method according to claim 22, wherein the first configuration information comprises identification information of the target handover beam.

**24.** The method according to any one of claims 14 to 23, wherein the first random access periodicity is greater than a second random access periodicity for initial access.

**25.** A communication apparatus, comprising:

a communication module, configured to obtain first configuration information, wherein the first configuration information is for configuring random access channel occasions in N consecutive frames within a first random access periodicity, wherein N is an integer greater than 1; and
a processing module, configured to determine a first random access resource based on the first configuration information, wherein the first random access resource is used by the first communication apparatus to access a target cell.

**26.** The apparatus according to claim 25, wherein the processing module is further configured to access the target cell through the first random access resource when the first communication apparatus performs cell handover.

**27.** The apparatus according to claim 25, further comprising:
the processing module is further configured to access the target cell through the first random access resource when a device group corresponding to a zone in which the first communication apparatus is located performs cell handover.

**28.** The apparatus according to any one of claims 25 to 27, wherein the first configuration information comprises first information and second information, the first information is for determining a start frame in the N consecutive frames within the first random access periodicity, and the second information comprises information about a value of N.

**29.** The apparatus according to claim 28, wherein the first information comprises a number M of a reference frame, and a number n_f_NTN of the start frame in the N consecutive frames within the first random access periodicity and the number M of the reference frame satisfy the following relational expression:

$$n_f_NTN \bmod (M*x)=y,$$

wherein
mod represents a modulo operator, and x and y are preconfigured positive integers.

**30.** The apparatus according to claim 28, wherein the first information comprises a number M of a reference frame, and a number n_f_NTN of the start frame in the N consecutive frames within the first random access periodicity and the reference frame satisfy the following relational expression:

$$n_f_NTN \bmod (2^{M}*x)=y,$$

wherein
mod represents a modulo operator, and x and y are preconfigured positive integers.

**31.** The apparatus according to claim 28, wherein the first information comprises a number M of a reference frame and a first offset R, and a number n_f_NTN of the start frame in the N consecutive frames within the first random access periodicity and the number M of the reference frame satisfy the following relational expression:

$$(n_f_NTN-R) \bmod (M*x)=y,$$

wherein
mod represents a modulo operator, and x and y are preconfigured positive integers.

**32.** The apparatus according to claim 28, wherein the first information comprises a number M of a reference frame and a first offset R, and a number n_f_NTN of the start frame in the N consecutive frames within the first random access periodicity and the reference frame satisfy the following relational expression:

$$(n_f_NTN - R) \bmod (2^{M}*x)=y,$$

wherein
mod represents a modulo operator, and x and y are preconfigured positive integers.

**33.** The apparatus according to any one of claims 29 to 32, further comprising: obtaining, by the first communication apparatus, third information, wherein the third information is for determining values of x and y.

**34.** The apparatus according to any one of claims 25 to 32, wherein the first configuration information comprises fourth information, and the fourth information indicates an association relationship between at least one handover beam of the first communication apparatus and a random access channel occasion within the first random access periodicity.

**35.** The apparatus according to claim 34, wherein the first random access resource comprises a random access channel occasion associated with a target handover beam of the first communication apparatus.

**36.** The apparatus according to claim 35, wherein the first configuration information comprises identification information of the target handover beam.

**37.** The apparatus according to any one of claims 25 to 36, wherein the first random access periodicity is greater than a second random access periodicity for initial access.

**38.** A communication apparatus, comprising:

a processing module, configured to determine first configuration information, wherein the first configuration information is for configuring random access channel occasions in N consecutive frames within a first random access periodicity, wherein N is an integer greater than 1; and

a communication module, configured to send the first configuration information to the first communication apparatus, wherein the first configuration information is for determining a first random access resource, and the first random access resource is used by the first communication apparatus to access a target cell.

**39.** The apparatus according to claim 38, wherein the first configuration information comprises first information and second information, the first information is for determining a start frame in the N consecutive frames within the first random access periodicity, and the second information comprises information about a value of N.

**40.** The apparatus according to claim 39, wherein the first information comprises a number M of a reference frame, and a number n_f_NTN of the start frame in the N consecutive frames within the first random access periodicity and the number M of the reference frame satisfy the following relational expression:

$$n_f_NTN \bmod (M*x)=y,$$

wherein
mod represents a modulo operator, and x and y are preconfigured positive integers.

**41.** The apparatus according to claim 39, wherein the first information comprises a number M of a reference frame, and a number n_f_NTN of the start frame in the N consecutive frames within the first random access periodicity and the reference frame satisfy the following relational expression:

$$n_f_NTN \bmod (2^{M}*x)=y,$$

wherein
mod represents a modulo operator, and x and y are preconfigured positive integers.

**42.** The apparatus according to claim 39, wherein the first information comprises a number M of a reference frame and a first offset R, and a number n_f_NTN of the start frame in the N consecutive frames within the first random access periodicity and the number M of the reference frame satisfy the following relational expression:

$$(n_f_NTN-R) \bmod (M*x)=y,$$

wherein
mod represents a modulo operator, and x and y are preconfigured positive integers.

**43.** The apparatus according to claim 39, wherein the first information comprises a number M of a reference frame and a first offset R, and a number n_f_NTN of the start frame in the N consecutive frames within the first random access periodicity and the reference frame satisfy the following relational expression:

$$(n_f_NTN-R) \bmod (2^{M}*x)=y,$$

wherein
mod represents a modulo operator, and x and y are preconfigured positive integers.

**44.** The apparatus according to any one of claims 40 to 43, further comprising: sending, by the second communication apparatus, third information, wherein the third information is for determining values of x and y.

**45.** The apparatus according to any one of claims 40 to 43, wherein the first configuration information comprises fourth information, and the fourth information indicates an association relationship between at least one handover beam of the first communication apparatus and a random access channel occasion within the first random access periodicity.

**46.** The apparatus according to claim 45, wherein the first random access resource comprises a random access channel occasion associated with a target handover beam of the first communication apparatus.

**47.** The apparatus according to claim 46, wherein the first configuration information comprises identification information of the target handover beam.

**48.** The apparatus according to any one of claims 38 to 47, wherein the first random access periodicity is greater than a second random access periodicity for initial access.

**49.** A communication apparatus, comprising:
a processor, wherein the processor is coupled to a memory, and the processor is configured to invoke computer program instructions stored in the memory, to perform the method according to any one of claims 1 to 13.

**50.** A communication apparatus, comprising:
a processor, wherein the processor is coupled to a memory, and the processor is configured to invoke computer program instructions stored in the memory, to perform the method according to any one of claims 14 to 24.

**51.** A communication system, comprising the communication apparatus according to any one of claims 25 to 37 and 49 and the communication apparatus according to any one of claims 38 to 48 and 50.

**52.** A computer-readable storage medium, wherein the computer-readable storage medium stores instructions; and when the instructions are run on a computer, the computer is enabled to perform the method according to any one of claims 1 to 13 or the method according to any one of claims 14 to 24.

**53.** A computer program product, comprising instructions, wherein when the instructions are run on a computer, the computer is enabled to perform the method according to any one of claims 1 to 13 or the method according to any one of claims 14 to 24.

Communication system 100
Network device 110
Terminal device 101
Terminal device 102
Terminal device 103
Terminal device 104
Terminal device 105
Terminal device 106

FIG. 1

201
Satellite
202
202

FIG. 2

gNB
5G user plane processing unit (UPF)
Data network
5G new air interface
NG interface
Terminal
Terrestrial station
Xn interface
5G access and mobility management function (AMF)
5G new air interface
5G session management function (SMF)
Terminal
gNB
5G control plane

FIG. 3

Satellite 401
Satellite 402
Satellite 403
Terrestrial station device

FIG. 4

Service zone
Non-service zone
Beam 0
Beam 1
Beam 2
Beam 3
Beam 4
Beam 5
Beam 6
Beam 7
Beam 8
Beam 9
Beam 10
Beam 11
Beam 12
Beam 13
Beam 14
Beam 15
Time unit T1
Time unit T2
Time unit T3
Time unit T4

FIG. 5

T1
SAT-1
SAT-2
v
UE-G1
bw-1
bw-2
bw-3
bw-4
bw-5
bw-6
Z1
Z1
Z3
T2
SAT-1
SAT-2
UE-G1
bw-1
bw-2
bw-3
bw-4
bw-5
bw-6
Z1
Z1
Z3

FIG. 6

First communication apparatus
Second communication apparatus
S701: First configuration information
S702: Determine a first random access resource based on the first configuration information
S703: Access a target cell through the first random access resource

FIG. 7

First random access periodicity
HO-RO
HO-RO
HO-RO
HO-RO
HO-RO
HO-RO
HO-RO
HO-RO
Frame 0
Frame 1
Frame T
Frame T+1
Time

FIG. 8

First random access periodicity
HO-SSB0
HO-SSB1
HO-RO1
HO-RO2
HO-RO3
HO-RO4
HO-SSB0
HO-SSB1
HO-SSB2
HO-SSB3
HO-RO1
HO-RO2
HO-RO3
HO-RO4
t1
Frame 0
Frame 1
t2
Frame T
Frame T+1
Time

FIG. 9

1000
Communication apparatus
1001
1002
Processing module
Communication module

FIG. 10

1100
Communication apparatus
1130
1110
Communication interface
Processor
1140
1120
Memory

FIG. 11

## INTERNATIONAL SEARCH REPORT

International application No.
**PCT/CN2023/135854**

**A. CLASSIFICATION OF SUBJECT MATTER**

H04W74/08(2024.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; CNABS; CNKI; VEN; WOTXT; USTXT; EPTXT; 3GPP: 帧, 随机接入时机, 周期, 群切换, frame, random access channel occasion, RACH occasion, period, group, handover

**C. DOCUMENTS CONSIDERED TO BE RELEVANT**

| Category* | Citation of document, with indication, where appropriate, of the relevant passages | Relevant to claim No. |
|---|---|---|
| X | CN 112584507 A (HUAWEI TECHNOLOGIES CO., LTD.) 30 March 2021 (2021-03-30) description, paragraphs [0042]-[0047], [0061]-[0064], [0070] and [0078]-[0195], and figure 4 | 1-53 |
| X | CN 109451585 A (HUAWEI TECHNOLOGIES CO., LTD.) 08 March 2019 (2019-03-08) description, paragraphs [0164]-[0177] and [0214]-[0393] | 1-53 |
| A | CN 113973396 A (HUAWEI TECHNOLOGIES CO., LTD.) 25 January 2022 (2022-01-25) entire document | 1-53 |
| A | CN 115052348 A (VIVO COMMUNICATION TECHNOLOGY CO., LTD.) 13 September 2022 (2022-09-13) entire document | 1-53 |
| A | US 2022086774 A1 (SAMSUNG ELECTRONICS CO., LTD.) 17 March 2022 (2022-03-17) entire document | 1-53 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 February 2024** | **06 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/135854**

| Patent document cited in search report | | | Publication date (day/month/year) | Patent family member(s) | | | Publication date (day/month/year) |
|---|---|---|---|---|---|---|---|
| CN | 112584507 | A | 30 March 2021 | WO | 2021063100 | A1 | 08 April 2021 |
| CN | 109451585 | A | 08 March 2019 | AU | 2019248309 | A1 | 29 October 2020 |
| | | | | AU | 2019248309 | B2 | 09 December 2021 |
| | | | | CA | 3095838 | A1 | 10 October 2019 |
| | | | | BR | 112020019834 | A2 | 05 January 2021 |
| | | | | JP | 2021520719 | A | 19 August 2021 |
| | | | | JP | 7150872 | B2 | 11 October 2022 |
| | | | | EP | 3768016 | A1 | 20 January 2021 |
| | | | | EP | 3768016 | A4 | 19 May 2021 |
| | | | | EP | 3768016 | B1 | 11 January 2023 |
| | | | | US | 2021022186 | A1 | 21 January 2021 |
| | | | | US | 11528751 | B2 | 13 December 2022 |
| | | | | WO | 2019192601 | A1 | 10 October 2019 |
| CN | 113973396 | A | 25 January 2022 | WO | 2022017118 | A1 | 27 January 2022 |
| CN | 115052348 | A | 13 September 2022 | WO | 2022188745 | A1 | 15 September 2022 |
| US | 2022086774 | A1 | 17 March 2022 | EP | 4185059 | A1 | 24 May 2023 |
| | | | | US | 2023232461 | A1 | 20 July 2023 |
| | | | | US | 11653319 | B2 | 16 May 2023 |
| | | | | WO | 2018203724 | A1 | 08 November 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211542962